# EUROPÄISCHE PATENTSCHRIFT

(11) **EP 3 495 171 B1**
(45) Veröffentlichungstag und Bekanntmachung des Hinweises auf die Patenterteilung: **10.06.2020**
(21) Anmeldenummer: 18190376.6
(22) Anmeldetag: 23.08.2018
(51) Int. Cl.: B60C 23/04

(54) **REIFENDRUCKÜBERWACHUNGSEINHEIT**
TIRE PRESSURE MONITORING UNIT
UNITÉ DE SURVEILLANCE DE LA PRESSION DE PNEUMATIQUES

(30) Priorität: 08.12.2017 DE 102017129215
(43) Veröffentlichungstag der Anmeldung: 12.06.2019
(73) Patentinhaber: Huf Hülsbeck & Fürst GmbH & Co. KG, 42551 Velbert (DE)
(72) Erfinder: DUSSINGER, Axel, 74906 Bad Rappenau (DE); ARNOLDO, Sven, 76316 Malsch (DE); GAMER, Benedikt, 75045 Walzbachtal (DE); GORENZWEIG, Igor, 42109 Wuppertal (DE); KESSLER, Ralf, 76327 Pfinztal (DE)

(56) Entgegenhaltungen:
- EP-A1- 2 735 456
- DE-A1-102014 011 949
- FR-A1- 2 839 683

## Beschreibung

Die Erfindung betrifft eine Reifendrucküberwachungseinheit für ein Kraftfahrzeug gemäß dem Oberbegriff des Patentanspruchs 1. EP 2 735 456 A beschreibt eine Reifendrucküberwachungseinheit umfassend ein Elektronikgehäuse mit einem Drucksensor, einer Lufteinlassöffnung und einer zwischen Drucksensor und Elektronikgehäuse angeordnete Dichtung mit einer Durchlassöffnung.

Die Fahrzeugsicherheit und Zuverlässigkeit sind zentrale Aspekte in der Automobiltechnik. Daher sollte allein schon aus sicherheitstechnischen Gründen der Reifendruck von Fahrzeugen bzw. Kraftfahrzeugen regelmäßig überprüft werden, was jedoch häufig vom Fahrzeugführer versäumt wird. Aus diesem Grund werden in modernen Fahrzeugen vermehrt Erfassungsvorrichtungen in Form von Reifendrucksensoren verwendet, die den Reifenluftdruck automatisch messen und an ein fahrzeugseitiges Steuergerät senden. Dadurch sollen Defekte oder Unfälle, welche auf einen zu niedrigen Reifenluftdruck zurückzuführen sind, vermieden werden. Folglich soll durch diese automatische Messung des Reifenluftdrucks eine kritische Abweichung des gemessenen Reifenluftdrucks von einem Reifendrucksollwert frühzeitig erkannt und dem Fahrzeugführer angezeigt werden, so dass eine manuelle Überprüfung entbehrlich ist. Bei solchen Systemen zur automatischen Messung des Reifenluftdrucks ist jeweils ein Reifendrucksensor an jedem Rad bzw. Luftreifen angeordnet. Eine Reifendrucküberwachungssytem umfasst dabei oft ein Reifenventil, das an der Felge befestigbar ist und ein Elektronikgehäuse. Beim Refenventil kann es sich um ein Metallventil oder ein Snapinventil handeln, an welches das Elektronikgehäuse befestigbar ist. In dem Elektronikgehäuse können elektronische Bauteile, insbesondere ein Sensor zur Erfassung des Reifenluftdrucks und/oder der Temperatur und eine Batterie sowie eine Sendeeinheit, angeordnet sein. Im Elektronikgehäuse ist eine Lufteinlassöffnung angeordnet, welche konzentrisch zum Sensor zur Erfassung des Reifenluftdrucks angeordnet ist, um den Reifendruck innerhalb des Reifens zu messen. Die Sendeeinheit übermittelt die gemessenen Reifendruckinformationen gegebenenfalls an eine Auswerteelektronik, die aber auch fahrzeugseitig vorgesehen sein kann. Bei der konzentrischen Anordnung der Lufteinlassöffnung zum Drucksensor hat sich herausgestellt, dass im Reifen befindliche Fluide bzw. kleine Partikel oder Reifendichtmittel eine Schädigung des Drucksensors durch direkte Einstrahlung verursachen können, wenn die Fluide bzw. kleine Partikel oder Reifendichtmittel unter Druck durch die Lufteinlassöffnung auf den Drucksensor treffen. Des Weiteren ist eine Schädigung des Drucksensors durch direkten Einstrahl mit einem Heißwasserdammpfstahler. Dies ist ist immer dann der Fall, wenn die Felge mit dem daran befestigten Reifendrucküberwachungssytem mit einem Heißwasserdampfstrahl gereinigt wird.

Der vorliegenden Erfindung liegt die Aufgabe zugrunde, den Drucksensor in kostengünstiger und zuverlässiger Weise vor Beschädigungen zu schützen.

Die erfindungsgemäße Aufgabe wird durch eine Reifendrucküberwachungseinheit mit dem kennzeichnenden Teil des Patentanspruchs 1 und durch ein Reifendrucküberwachungssystem mit dem kennzeichnenden Teil des Patentanspruchs 12 gelöst. In den abhängigen Ansprüchen sind vorteilhafte und besonders zweckmäßige Ausgestaltungen der Erfindung angegeben.

Dazu ist erfindungsgemäß vorgesehen, dass in der Dichtfläche der Dichtungsaufnahme eine nutförmige Ausnehmung ausgebildet ist. Der besondere Vorteil der Erfindung ist, dass die Dichtungsaufnahme zwei Funktionen mit sich bringt. Zum Einen wird die Dichtung in der entsprechenden Position zum Drucksensor und der Lufteinlasssöffnung, welche im Elektronikgehäuse ausgebildet ist, ausgerichtet. Zum Anderen weist die Dichtfläche de Dichtungsaufnahme die nutförmige Ausnehmung auf, welche zusammen mit der Lufteinlasssöffnung im Elektronikgehäuse und der Luftdurchlassöffnung in der Dichtung einen Kanal zum Drucksensor bilden. Dadurch wird eine direkte Einstrahlung des im Reifen befindlichen Fluides oder mit dem Dampfstrahl auf den Drucksensor vermieden, so dass eine Schädigung des Drucksensors ausgeschlossen ist. Das beschleunigte Fluid wird zuerst entweder durch die Innenwände der Lufteinlasssöffnung im Elektronikgehäuse oder durch die Dichtung abgebremst.

Eine die Erfindung verbessernde Maßnahme sieht vor, dass der Drucksensor eine Drucksensoröffnung aufweist, wobei die Mittelachse der Drucksensoröffnung des Drucksensors und die Mittelachse der Lufteinlassöffnung des Elektronikgehäuses parallel angeordnet sind. Diese Anordnung bringt für die Fertigung einen entscheidenden Vorteil mit, weil es keine Hilfsvorrichtungen wie z. B zusätzliche Schieber etc. für den Spritzgießprozess benötigt werden. Dies wäre dann der Fall, wenn die beiden Mittelachsen des Drucksensoröffnung und der Lufteinlassöffnung z.B. senkrecht zueinander stehen würden. Ein weiterer Vorteil ergibt sich aus derartiger Anordnung, dass bei eventuell verstopfter Lufteinlassöffnung des Elektronikgehäuses mit Schmutzpartikeln durch die beim Beschleunigen des Kraftfahrzeugrads entstehende Zentrifugalkraft die Verstopfung aufgelöst wird. Es kommt also zu einer Selbstreinigung der Lufteinlassöffnung im Elektronikgehäuse.

Vorzugsweise können die Luftdurchlassöffnung der Dichtung und die Drucksensoröffnung des Drucksensors konzentrisch angeordnet sein. Auf diese Weise ist es gewährleistet, dass der zu messende Druck zuverlässig erfolgen kann, da die beiden Öffnungen genau übereinander liegen.

Sehr kostengünstig und einfach ist die Konstruktion, wenn die Lufteinlassöffnung im Elektronikgehäuse einen Durchmesser von 0,8 bis 1,5 mm aufweist.

Ebenfalls ist es denkbar, dass die Lufteinlassöffnung im Elektronikgehäuse eine Fläche von größer als 0,8 mm² aufweist. Das hat den Vorteil, dass die Selbstreinigungsfunktion zuverlässig erfolgen kann. Vorteilhafterweise ist, wenn die Lufteinlassöffnung im Elektronikgehäuse von innen nach aussen konisch ausgebildet ist, sodass die Selbstreinigung der Lufteinlassöffnungnoch zuverlässiger erfolgen kann.

Weiterhin kann gemäß der Erfindung vorgesehen sein, dass die Lufteinlassöffnung im Elektronikgehäuse eine Höhe von 2 bis 15 mm aufweist. Durch die Höhe von 2 bis 15 mm der Lufteinlassöffnung im Elektronikgehäuse hat sich gezeigt, dass die Beschädigung des Drucksensors durch das seitlich unter Druck eintretende Fluid in die Lufteinlassöffnung des Elektronikgehäuses noch zuverlässiger vermieden werden kann.

Ebenfalls ist es denkbar, dass im Bereich der Lufteinlassöffnung eine Schutzwand ausgebildet ist. Auch mittels der Schutzwand kann die Beschädigung des Drucksensors durch das seitlich unter Druck eintretende Fluid in die Lufteinlassöffnung des Elektronikgehäuses noch zuverlässiger vermieden werden.

Vorteilhafterweise kann die nutförmige Ausnehmung eine Länge von größer als 0,8 mm aufweisen. Durch die Länge von größer als 0,8 mm kann keine Überlappung der Lufteinlassöffnung im Elektronikgehäuse und des Drucksensoröffnung stattfinden, was weiterhin die Schädigung des Drucksensors vorbeugt.

In einer weiteren die Erfindung verbessernden Ausführungsform kann das Elektronikgehäuse mindestens eine erste Lufteinlassöffnung und eine zweite Lufteinlassöffnung im Elektronikgehäuse aufweisen, wobei die beiden Lufteinlassöffnungen mittels der nutförmigen Ausnehmung verbindbar sind. Bei zwei Lufteinlassöffnungen im Elektronikgehäuse ist die Wahrscheinlichkeit der Verstopfung mit Schmutzpartikeln geringer als bei nur einer Lufteinlassöffnung, sodass eine zuverlässige Druckmessung erfolgen kann.

Um die Dichtigkeit zu verbessern, kann vorgesehen sein, dass die im Elektronikgehäuse angeordneten elektronischen Bauteile von Vergussmasse umgeben sind.

Ebenfalls ist denkbar, dass die im Elektronikgehäuse angeordneten elektronischen Bauteile mit einem Deckel dicht, insbesondere mittels eines Laserschweissverfahrens, verschließbar sind.
Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhafte bevorzugte Ausführungsbeispiele der Erfindung dargestellt sind. In der Zeichnung zeigt:
Figur 1 den hinteren Teil eines Fahrzeugs mit einer Felge, einem Luftreifen und einem Reifenventil,
Figur 2 eine perspektivische Darstellung auf eine Felge, an der ein Reifendrucküberwachungssystem gemäß der vorliegenden Erfindung angebracht ist,
Figur 3 ein Reifendrucküberwachungssystem gemäß eines Standes der Technik,
Figur 4 eine Schnittdarstellung des Reifendrucküberwachungssystem gemäß eines Standes der Technik,
Figur 5a eine Explosionsdarstellung eines Reifendrucküberwachungssystems gemäß der ersten erfindungsgemäßen Ausführungsform,
Figur 5b eine Ansicht von unten eines Elektronikgehäuses einer Reifendrucküberwachungseinheit gemäß der ersten erfindungsgemäßen Ausführungsform,
Figur 5c eine Ansicht von oben der Reifendrucküberwachungseinheit gemäß der ersten erfindungsgemäßen Ausführungsform,
Figur 5d eine Schnittdarstellung der Reifendrucküberwachungseinheit gemäß der ersten erfindungsgemäßen Ausführungsform,
Figur 5e eine perspektivische Darstellung eines Schnittes durch das Elektronikgehäuse der Reifendrucküberwachungseinheit gemäß der ersten erfindungsgemäßen Ausführungsform,
Figur 6a ein Reifendrucküberwachungssystem gemäß der zweiten erfindungsgemäßen Ausführungsform,
Figur 6b eine Schnittdarstellung einer Reifendrucküberwachungseinheit gemäß der zweiten erfindungsgemäßen Ausführungsform,
Figur 6c eine Ansicht von unten eines Elektronikgehäuses einer Reifendrucküberwachungseinheit gemäß der zweiten erfindungsgemäßen Ausführungsform,
Figur 6d eine perspektivische Darstellung eines Schnittes durch das Elektronikgehäuse der Reifendrucküberwachungseinheit gemäß der zweiten erfindungsgemäßen Ausführungsform,
Figur 7a ein Reifendrucküberwachungssystem gemäß der dritten erfindungsgemäßen Ausführungsform,
Figur 7b eine Schnittdarstellung einer Reifendrucküberwachungseinheit gemäß der dritten erfindungsgemäßen Ausführungsform,
Figur 7c eine perspektivische Darstellung eines Schnittes durch ein Elektronikgehäuse der Reifendrucküberwachungseinheit gemäß der dritten erfindungsgemäßen Ausführungsform,
Figur 7d eine Ansicht von unten eines Elektronikgehäuses der Reifendrucküberwachungseinheit gemäß der dritten erfindungsgemäßen Ausführungsform,

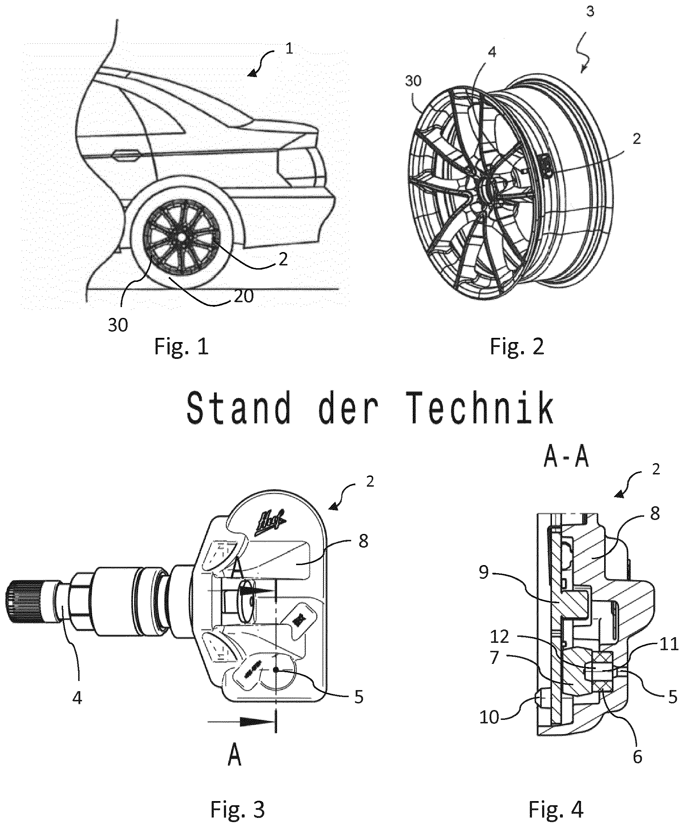

In Figur 1 ist das Heck eines Fahrzeuges 1 und ein auf einer Felge 30 sitzender, hinterer Luftreifen 20 zu sehen. In Figur 2 ragt ein Reifenventil 4 aus der Felge 30 hervor. An dessen Ventilfuss eine Reifendrucküberwachungseinheit 2 befestigt ist. Das Reifenventil 4 und die Reifendrucküberwachungseinheit 2 bilden zusammen ein Reifendrucküberwachungssystem 3.

In Figur 3 ist ein Reifendrucküberwachungssystem 3 gezeigt, welches bereits aus dem Stand der Technik bekannt ist.

In Figur 4 ist eine Schnittdarstellung des Reifendrucküberwachungssystem 3 gemäß eines Standes der Technik gezeigt. Dabei sind die elektronischen Bauteile wie eine Leiterplatte 9, ein Drucksensor 7 , Batterie 13 sowie ein Sender zum drahtlosen Übertragen des mindestens einen reifenspezifischen Parameters etc. mittels mindestens eines Befestigungsdoms 10 in einem Elektronikgehäuse 8 befestigt, insbesondere heißverstemmt. Im Elektronikgehäuse 8 ist eine Lufteinlassöffnung 5 ausgebildet. Zwischen dem Drucksensor 7 und der Lufteinlassöffnung 5 befindet sich eine zylinderförmige Silikondichtung 6, welche eine Luftdurchlassöffnung 12 aufweist. Die Lufteinlassöffnung 5 und die Luftdurchlassöffnung 12 sind konzentrisch ausgerichtet. Hier kann das im Reifeninneren befindliche Fluid bzw. Schmutzpartikeln ungehindert unter Druck auf den Drucksensor 7 treffen und diesen beschädigen.

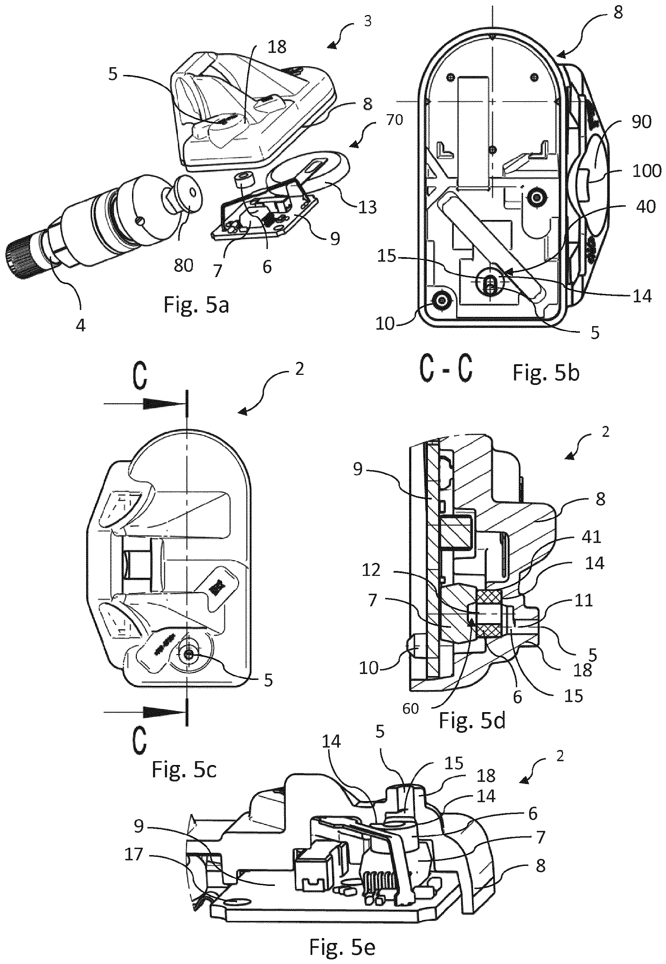

In Figur 5a ist eine Explosionsdarstellung eines Reifendrucküberwachungssystems 3 gemäß der ersten erfindungsgemäßen Ausführungsform gezeigt. Das Reifendrucküberwachungssystem 3 weist ein Reifenventil 4 und eine Reifendrucküberwachungseinheit 2 auf. Die Reifendrucküberwachungseinheit 2 umfasst ein Elektronikgehäuse 8 mit einem Hohlraum, in dem elektronische Bauteile wie eine Leiterplatte 9, eine Batterie 13, ein Drucksensor 7, ein Mikrocontroller sowie ein Sender angeordnet sein können. Ferner ist mindestens eine durchgehende Lufteinlassöffnung 5 im Elektronikgehäuse 8 angeordnet, wobei zwischen dem Drucksensor 7 und der Lufteinlassöffnung 5 eine Dichtung 6 in einer dafür vorgesehenen Aufnahme 40 im Elektronikgehäuse 8 eingelegt ist. Das Reifenventil 4 wird in eine durchgehende Öffnung an der Felge gesteckt und mit einer Überwurfmutter befestigt. An einem Aussenende des Reifenventils 4 wird die Reifendrucküberwachungseinheit 2 mit einer Schraube 80 im Hohlraum des Reifen befestigt. Der durch den Drucksensor 7 gemessene Druck wird z. B an eine fahrzeigseitige Steuereinheit, insbesondere ECU, gesendet.

In Figur 5b ist eine Ansicht von unten eines Elektronikgehäuses 8 von einer Reifendrucküberwachungseinheit 2 gemäß der ersten erfindungsgemäßen Ausführungsform gezeigt. Die Dichtungsaufnahme 40 weist eine zylindrische Form mit einer Mantelfläche 41 und einer Dichtungsfläche 14 auf. In der Dichtungsfläche 14 ist eine nutförmige Ausnehmung 15 ausgebildet. Die Nutförmige Ausnehmung 15 kann runde Enden aufweisen. Die nutförmige Ausnehmung 15 ist mit der Lufteinlassöffnung 5 verbunden. Die Lufteinlassöffnung 5 des Elektronikgehäuses 8 kann einen Durchmesser von 0,8 bis 1,5 mm aufweisen. Die nutförmige Ausnehmung 15 kann eine Länge von größer als 0,8 mm aufweisen. Die nutförmige Ausnehmung 15 kann eine Höhe von größer als 0,8 mm aufweisen. Die nutförmige Ausnehmung 15 kann eine Breite aufweisen, welche dem Durchmesser der Lufteinlassöffnung 5 entspricht. Die Dichtung 6 weist eine zylindrische Form mit einer durchgehenden Luftdurchlassöffnung 12 auf. Die Lufteinlassöffnung 5 und die nutförmige Ausnehmung 15 sowie die Luftdurchlassöffnung 12 bilden einen Kanal zum Drucksensor, wobei die Lufteinlassöffnung 5 und Luftdurchlassöffnung 12 mittels der nutförmigen Ausnehmung 15 versetzt angeordnet sind. Der Kanal kann im Wesentlichen dieselbe Querschnittsfläche über den gesamten Verlauf aufweisen.

In Figur 5c ist eine Ansicht von oben der Reifendrucküberwachungseinheit 2 gemäß der ersten erfindungsgemäßen Ausführungsform gezeigt. Durch die Lufteinlassöffnung 5 ist ein Schnitt C-C angedeutet.

In Figur 5d ist eine Schnittdarstellung C-C der Reifendrucküberwachungseinheit 2 gemäß der ersten erfindungsgemäßen Ausführungsform gezeigt. Ferner sind Befestigungsdome 10 im Hohlraum des Elektronikgehäuses 8 ausgebildet. Die Leiterplatte 9 mit dem darauf angeordneten Drucksensor 7 wird gegen die Dichtungsfläche 14 gedrückt und unter Vorspannung auf die Dichtung 6 mittels der Befestigungsdome 10 mit dem Elektronikgehäuse 8 verbunden. Die die konischen Befestigungsdome 10 werden in die Befestigungsöffnungen 17 der Leiterplatte 9 eingesteckt. Anschließend werden die Enden der Befestigungsdome 10 heißverstemmt. Infolgedessen verformen sich die Enden der Befestigungsdome 10 pilzförmig, sodass das die Leiterplatte 9 sicher gegen Vibrationen im Elektronikgehäuse 8 befestigt ist. Die im Elektronikgehäuse 8 ausgebildete Lufteinlassöffnung 5 ist von einem Turm 18 umgeben, welcher zum Schutz vor seitlicher Einstrahlung des im inneren des Luftreifens befindlichen Fluides sowie vor direktem Einstrahl mit einem Heißwasserdammpfstahler dient. Der Turm 18 erschreckt sich radial nach außen von der Oberfläche des Elektronikgehäuses 8 und die Höhe des Turmes 18 weist eine zylindrische Form mit einer Höhe von 3 bis 15 mm auf. Der Außendurchmesser des Turmes 18 ist größer als die Lufteinlassöffnung 5 ausgebildet.

In Figur 5e ist eine perspektivische Darstellung eines Schnittes durch das Elektronikgehäuse 8 der Reifendrucküberwachungseinheit 2 gemäß der ersten erfindungsgemäßen Ausführungsform gezeigt.

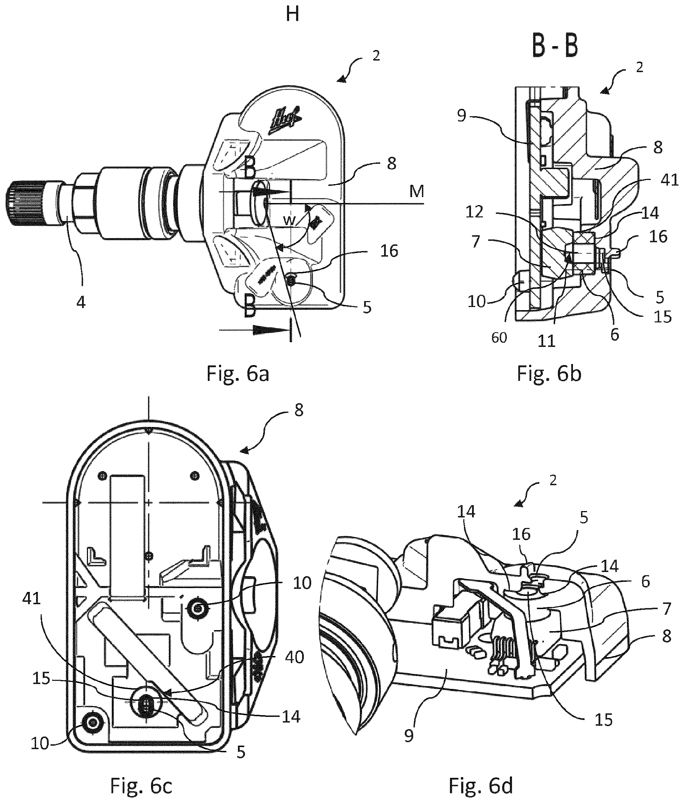

In Figuren 6a-6d ist ein Reifendrucküberwachungssystem 3 gemäß der zweiten erfindungsgemäßen Ausführungsform gezeigt. Das Reifendrucküberwachungssystem 3 weist ein Reifenventil 4 und eine Reifendrucküberwachungseinheit 2 auf. Die zweite Ausführungsform hat denselben Aufbau wie die erste Ausführungsform mit nur einem einzigen Unterschied. Der in der ersten Ausführungsform beschriebene Turm 18 entfällt, welcher zum Schutz vor seitlicher Einstrahlung des im inneren des Luftreifens befindlichen Fluides oder kleiner Partikeln sowie vor direktem Einstrahl mit einem Heißwasserdammpfstahler in den Drucksensor 7 dient. Stattdessen ist eine kreissegmentförmige Rippe 16 um die Lufteinlassöffnung 5 im Elektronikgehäuse 8 ausgebildet. Die kreissegmentförmige Rippe 16 erstreckt sich radial nach außen von der Oberfläche des Elektronikgehäuses 8 und die Höhe der Rippe 16 weist eine Länge von mindestens ein Achtel eines Kreises und eine Höhe von mindestens 2 mm. Die Rippe 16 kann in einem Winkel W von 0 bis 80 Grad von der Mittelachse M des Reifenventils 4 angeordnet werden.

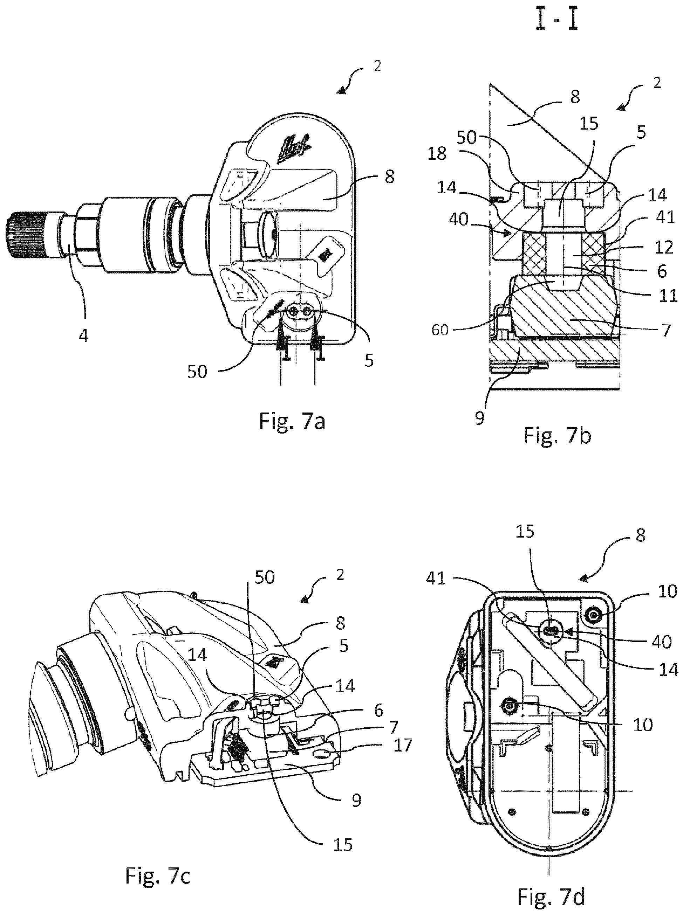

In Figuren 7a-7d ist ein Reifendrucküberwachungssystem 3 gemäß der dritten erfindungsgemäßen Ausführungsform gezeigt. Das Reifendrucküberwachungssystem 3 weist ein Reifenventil 4 und eine Reifendrucküberwachungseinheit 2 auf. Die Reifendrucküberwachungseinheit 2 umfasst ein Elektronikgehäuse 8 mit einem Hohlraum,in dem elektronische Bauteile wie eine Leiterplatte 9, eine Batterie 13, ein Drucksensor 7, ein Mikrocontroller und ein Sender angeordnet sein können. Ferner sind zwei durchgehende Lufteinlassöffnungen 5, 50 im Elektronikgehäuse 8 angeordnet, wobei zwischen dem Drucksensor 7 und den Lufteinlassöffnungen 5, 50 eine Dichtung 6 in einer dafür vorgesehenen Aufnahme 40 im Elektronikgehäuse 8 eingelegt ist. Das Reifenventil 4 wird in eine durchgehende Öffnung in der Felge 30 eingesteckt und mit einer Überwurfmutter befestigt. An einem Außenende des Reifenventils 4 wird die Reifendrucküberwachungseinheit 2 mit einer Schraube 80 im Hohlraum des Reifen befestigt. Der durch den Drucksensor 7 gemessene Druck wird z. B an eine fahrzeugseitige Steuereinheit, insbesondere ECU, gesendet.

Die Dichtungsaufnahme 40 weist eine zylindrische Form mit einer Mantelfläche 41 und einer Dichtungsfläche 14 auf. In der Dichtungsfläche 14 ist eine nutförmige Ausnehmung 15 ausgebildet. Die Nutförmige Ausnehmung 15 kann runde Enden aufweisen. Die nutförmige Ausnehmung 15 ist mit den beiden Lufteinlassöffnungen 5, 50 verbunden. Die Lufteinlassöffnungen 5, 50 im Elektronikgehäuse 8 können jeweils einen Durchmesser von 0,8 bis 1,5 mm aufweisen. Die nutförmige Ausnehmung 15 kann eine Länge von größer als 0,8 mm aufweisen. Die nutförmige Ausnehmung 15 kann eine Höhe von größer als 0,8 mm aufweisen. Die nutförmige Ausnehmung 15 kann eine Breite aufweisen, welche dem Durchmesser der Lufteinlassöffnung 5 entspricht. Die Dichtung 6 weist eine zylindrische Form mit einer durchgehenden Luftdurchlassöffnung 12 auf. Die Lufteinlassöffnungen 5, 50 und die nutförmige Ausnehmung 15 sowie die Luftdurchlassöffnung 12 bilden einen Kanal zum Drucksensor, wobei die Lufteinlassöffnungen 5, 50 und die Luftdurchlassöffnung 12 mit der nutförmigen Ausnehmung 15 verbunden sind. Ferner sind die Lufteinlassöffnungen 5, 50 und die Luftdurchlassöffnung 12 versetzt angeordnet. Außerdem kann der Turm 18 oder die kreissegmentförmige Rippe 16, wie in der ersten und der zweiten Ausführungsform bereits offenbart, zum Schutz des Drucksensors 7 vor seitlicher Einstrahlung des im inneren des Luftreifens befindlichen Fluides oder vor kleinen Partikeln sowie vor direktem Einstrahl mit einem Heißwasserdammpfstahler dienen. Des Weiteren kann die Rippe 16 und/oder der Turm 18 die Lufteinlasssöffnung 5 vor einem aus dem Reifenventil 4 austrettenden Dichtungsmittel, welches bei einem undichten Fahrzeugreifen eingesetzt wird.

Bei allen drei Ausführungsformen ist denkbar, dass der Hohlraum im Elektronikgehäuse, welcher für die Elektronikbauteile vorgesehen ist, mit einem Deckel dicht, insbesondere mittels eines Laserschweissverfahrens, verschlossen wird. Alternativ kann der Hohlraum im Elektronikgehäuse bzw. die Montageöffnung mit Vergussmasse ausgegossen werden, um die elektronischen Bauteile vor Feuchtigkeit zu schützen und die Dauerfestigkeit der Drucküberwachungseinheit zu gewährleisten. Ferner ist bei allen drei Ausführungsformen denkbar, dass zur Befestigung der Reifendrucküberwachungseinheit 2 an der Felge 30 anstatt des Metallventils 4 ein Snapinventil verwendbar ist.

Die vorstehend beschriebene Erfindung ist selbstverständlich nicht auf die beschriebenen und dargestellten Ausführungsformen beschränkt. Es ist ersichtlich, dass an den in der Figur dargestellten Ausführungsformen zahlreiche, dem Fachmann entsprechend der beabsichtigten Anwendung naheliegende Abänderungen vorgenommen werden können, ohne dass dadurch der Bereich der Erfindung verlassen wird. Zur Erfindung gehört alles dasjenige, was in der Beschreibung enthalten und/oder in der Zeichnung dargestellt ist, einschließlich dessen, was abweichend von den konkreten Ausführungsbeispielen für den Fachmann naheliegt.

## Patentansprüche

1. Reifendrucküberwachungseinheit (2) zur Anordnung innerhalb eines Kraftfahrzeugreifens (20) zur Erfassung des Reifenfülldrucks umfassend:
ein Elektronikgehäuse (8), in welchem eine Leiterplatte (9) mit einem Drucksensor (7) zum Messen des Reifendrucks sowie einem Sender zum drahtlosen Übertragen des mindestens einen reifenspezifischen Parameters angeordnet sind,
wobei im Elektronikgehäuse (8) mindestens eine Lufteinlassöffnung (5) ausgebildet ist,
wobei im Elektronikgehäuse (8) eine Dichtung (6) angeordnet ist,
wobei im Elektronikgehäuse (8) eine Dichtungsaufnahme (40) ausgebildet und die Dichtungsaufnahme (40) als eine im Wesentlichen zylinderförmige Ausnehmung ausgebildet ist,
welche eine Mantelfläche (41) sowie eine Dichtfläche (14) aufweist,
wobei die Dichtung (6) zwischen dem Drucksensor (7) und dem Elektronikgehäuse (8) angeordnet ist und die Dichtung (6) eine Luftdurchlassöffnung (12) aufweist,
wobei in der Dichtfläche (14) der Dichtungsaufnahme (40) eine nutförmige Ausnehmung (15) ausgebildet ist, **dadurch gekennzeichnet, dass**
die Lufteinlassöffnung (5) und die nutförmige Ausnehmung (15) sowie die Luftdurchlassöffnung (12) einen Kanal zum Drucksensor bilden, wobei die Lufteinlassöffnung (5) und Luftdurchlassöffnung (12) mittels der nutförmigen Ausnehmung (15) versetzt angeordnet sind.

2. Reifendrucküberwachungseinheit (2) nach Anspruch 1, **dadurch gekennzeichnet, dass** der Drucksensor (7) eine Drucksensoröffnung (60) aufweist, wobei die Mittelachse der Drucksensoröffnung (60) des Drucksensors (7) die Mittelachse (11) der Lufteinlassöffnung (12) des Elektronikgehäuses (8) parallel angeordnet sind.

3. Reifendrucküberwachungseinheit (2) nach Anspruch 2, **dadurch gekennzeichnet, dass** die Luftdurchlassöffnung (12) der Dichtung (6) und die Drucksensoröffnung (60) des Drucksensors (7) konzentrisch angeordnet sind.

4. Reifendrucküberwachungseinheit (2) nach mindestens einem der Ansprüche 1 bis 3, **dadurch gekennzeichnet, dass** die Lufteinlassöffnung (5) im Elektronikgehäuse (8) einen Durchmesser von 0,8 bis 1,5 mm aufweist.

5. Reifendrucküberwachungseinheit (2) nach mindestens einem der Ansprüche 1 bis 4, **dadurch gekennzeichnet, dass** die Lufteinlassöffnung (5) im Elektronikgehäuse (8) eine Fläche von größer als 0,8 mm² aufweist.

6. Reifendrucküberwachungseinheit (2) nach mindestens einem der Ansprüche 1 bis 5, **dadurch gekennzeichnet, dass** die Lufteinlassöffnung (5) im Elektronikgehäuse (8) eine Höhe von 2 bis 15 mm aufweist.

7. Reifendrucküberwachungseinheit (2) nach mindestens einem der Ansprüche 1 bis 6, **dadurch gekennzeichnet, dass** im Bereich der Lufteinlassöffnung (5) eine Schutzwand (16) ausgebildet ist.

8. Reifendrucküberwachungseinheit (2) nach mindestens einem der Ansprüche 1 bis 7, **dadurch gekennzeichnet, dass** die nutförmige Ausnehmung (15) eine Länge von größer als 0,8 mm aufweist.

9. Reifendrucküberwachungseinheit (2) nach mindestens einem der Ansprüche 1 bis 8, **dadurch gekennzeichnet, dass** das Elektronikgehäuse (8) mindestens eine erste Lufteinlassöffnung (5) und eine zweite Lufteinlassöffnung (50) im Elektronikgehäuse (8) aufweist, wobei die beiden Lufteinlassöffnungen (5, 50) mittels der nutförmigen Ausnehmung (15) verbindbar sind.

10. Reifendrucküberwachungseinheit (2) nach mindestens einem der Ansprüche 1 bis 9, **dadurch gekennzeichnet, dass** die im Elektronikgehäuse (8) angeordnete elektronische Bauteile (70) von Vergussmasse umgeben sind.

11. Reifendrucküberwachungseinheit (2) nach mindestens einem der Ansprüche 1 bis 10, **dadurch gekennzeichnet, dass** die im Elektronikgehäuse (8) angeordnete elektronische Bauteile (70) mit einem Deckel dicht, insbesondere mittels eines Laserschweissverfahrens, verschlossen sind.

12. Reifendrucküberwachungssystem (3) umfassend:
ein Reifenventil (4) zur Anordnung an einer Kraftfahrzeugfelge (3) und
eine Reifendrucküberwachungseinheit (2) zur Anordnung innerhalb eines Kraftfahrzeugreifens zur Erfassung des Reifenfülldrucks mit einem Elektronikgehäuse (8), in welchem eine Leiterplatte (9) mit einem Drucksensor (7) zum Messen des Reifendrucks sowie einem Sender zum drahtlosen Übertragen des mindestens einen reifenspezifischen Parameters angeordnet sind,
wobei im Elektronikgehäuse (8) mindestens eine Lufteinlassöffnung (5) ausgebildet ist,
wobei im Elektronikgehäuse (8) eine Dichtung (6) angeordnet ist,
wobei im Elektronikgehäuse (8) eine Dichtungsaufnahme (40) ausgebildet ist und die Dichtungsaufnahme (40) als eine im Wesentlichen zylinderförmige Ausnehmung ausgebildet ist,
welche eine Mantelfläche (41) sowie eine Dichtfläche (14) aufweist,
wobei die Dichtung (6) zwischen dem Drucksensor (7) und dem Elektronikgehäuse (8) angeordnet ist und die Dichtung (6) eine Luftdurchlassöffnung (12) aufweist, wobei in der Dichtfläche (14) der Dichtungsaufnahme (40) eine nutförmige Ausnehmung (15) ausgebildet ist, **dadurch gekennzeichnet, dass**
die Lufteinlassöffnung (5) und die nutförmige Ausnehmung (15) sowie die Luftdurchlassöffnung (12) einen Kanal zum Drucksensor bilden, wobei die Lufteinlassöffnung (5) und Luftdurchlassöffnung (12) mittels der nutförmigen Ausnehmung (15) versetzt angeordnet sind.

## Claims

1. A tyre pressure monitoring unit (2) for arrangement inside a motor vehicle tyre (20) for capturing the tyre inflation pressure, comprising:
an electronics housing (8), in which a printed circuit board (9) with a pressure sensor (7) for measuring the tyre pressure and a transmitter for wirelessly transmitting the at least one tyre-specific parameter are arranged,
wherein at least one air inlet (5) is formed in the electronics housing (8),
wherein a gasket (6) is arranged inside the electronics housing (8),
wherein a gasket seating (40) is formed in the electronics housing (8) and the gasket seating (40) is embodied as a substantially cylindrical recess which has a shell surface (41) and a sealing surface (14),
wherein the gasket (6) is arranged between the pressure sensor (7) and the electronics housing (8) and the gasket (6) has an air passage opening (12),
wherein a groove-like recess (15) is formed in the sealing surface (14) of the gasket seating (40), **characterized in that**
the air inlet (5) and the groove-like recess (15) as well as the air passage opening (12) form a channel to the pressure sensor, wherein the air inlet (5) and the air passage opening (12) are arranged with an offset due to the groove-like recess (15).

2. The tyre pressure monitoring unit (2) according to claim 1, **characterized in that** the pressure sensor (7) has a pressure sensor opening (60), wherein the central axis of the pressure sensor opening (60) in the pressure sensor (7) and the central axis (11) of the air inlet (12) in the electronics housing (8) are aligned parallel to each other.

3. The tyre pressure monitoring unit (2) according to claim 2, **characterized in that** the air passage opening (12) in the gasket (6) and the pressure sensor opening (60) in the pressure sensor (7) are arranged concentrically.

4. The tyre pressure monitoring unit (2) according to at least one of claims 1 to 3, **characterized in that** the air inlet (5) in the electronics housing (8) has a diameter from 0.8 to 1.5 mm.

5. The tyre pressure monitoring unit (2) according to at least one of claims 1 to 4, **characterized in that** the air inlet (5) in the electronics housing (8) has an area greater than 0.8 mm².

6. The tyre pressure monitoring unit (2) according to at least one of claims 1 to 5, **characterized in that** the air inlet (5) in the electronics housing (8) has a height from 2 to 15 mm.

7. The tyre pressure monitoring unit (2) according to at least one of claims 1 to 6, **characterized in that** a protective wall (16) is formed in the region of the air inlet (5).

8. The tyre pressure monitoring unit (2) according to at least one of claims 1 to 7, **characterized in that** the groove-like recess (15) has a length greater than 0.8 mm.

9. The tyre pressure monitoring unit (2) according to at least one of claims 1 to 8, **characterized in that** the electronics housing (8) has at least a first air inlet (5) and a second air inlet (50) in the electronics housing (8), wherein both air inlets (5, 50) can be connected via the groove-like recess (15).

10. The tyre pressure monitoring unit (2) according to at least one of claims 1 to 9, **characterized in that** the electronic components (70) disposed inside the electronics housing (8) are surrounded by casting compound.

11. The tyre pressure monitoring unit (2) according to at least one of claims 1 to 10, **characterized in that** the electronic components (70) disposed inside the electronics housing (8) are sealed in leak-proof manner, in particular by means of a laser welding process.

12. A tyre pressure monitoring system (3) comprising:
a tyre valve (4) for arrangement on a motor vehicle wheel rim (3) and
a tyre pressure monitoring unit (2) for arrangement inside a motor vehicle tyre for capturing the tyre inflation pressure, with an electronics housing (8), in which a printed circuit board (9) with a pressure sensor (7) for measuring the tyre pressure and a transmitter for wirelessly transmitting the at least one tyre-specific parameter are arranged,
wherein at least one air inlet (5) is formed in the electronics housing (8),
wherein a gasket (6) is arranged inside the electronics housing (8),
wherein a gasket seating (40) is formed in the electronics housing (8) and the gasket seating (40) is embodied as a substantially cylindrical recess which has a shell surface (41) and a sealing surface (14),
wherein the gasket (6) is arranged between the pressure sensor (7) and the electronics housing (8) and the gasket (6) has an air passage opening (12),
wherein a groove-like recess (15) is formed in the sealing surface (14) of the gasket seating (40), **characterized in that**
the air inlet (5) and the groove-like recess (15) as well as the air passage opening (12) form a channel to the pressure sensor, wherein the air inlet (5) and the air passage opening (12) are arranged with an offset due to the groove-like recess (15).

## Revendications

1. Unité de supervision de la pression des pneus (2), destinée à être placée à l'intérieur d'un pneu de véhicule automobile (20) pour détecter la pression des pneus, comprenant :
un boîtier électronique (8), dans lequel sont placés une carte de circuit imprimé (9) pourvue d'un capteur de pression (7) destiné à mesurer la pression des pneus, ainsi que d'un émetteur dédié à la transmission de l'au moins un paramètre spécifique au pneu,
dans le boîtier électronique (8) étant conçu au moins un orifice d'entrée d'air (5),
dans le boîtier électronique (8) étant placé un joint (6),
dans le boîtier électronique (8) étant conçu un logement de joint (40) et le logement de joint (40) étant conçu sous la forme d'un évidement de forme sensiblement cylindrique, lequel comporte une surface d'enveloppe (41) ainsi qu'une surface d'étanchéité (14),
le joint (6) étant placé entre le capteur de pression (7) et le boîtier électronique (8) et le joint (6) comportant un orifice de passage d'air (12),
dans la surface d'étanchéité (14) du logement de joint (40) étant conçu un évidement (15) en forme de rainure, **caractérisée en ce que**
l'orifice d'entrée d'air (5) et l'évidement (15) en forme de rainure, ainsi que l'orifice de passage d'air (12) forment une voie vers le capteur de pression, l'orifice d'entrée d'air (5) et l'orifice de passage d'air (12) étant placés en décalage, au moyen de l'évidement (15) en forme de rainure.

2. Unité de supervision de la pression des pneus (2) selon la revendication 1, **caractérisée en ce que** le capteur de pression (7) comporte un orifice de capteur de pression (60), l'axe médian de l'orifice de capteur de pression (60) du capteur de pression (7) et l'axe médian (11) de l'orifice d'entrée d'air (12) du boîtier électronique (8) étant placés en parallèle.

3. Unité de supervision de la pression des pneus (2) selon la revendication 2, **caractérisée en ce que** l'orifice de passage d'air (12) du joint (6) et l'orifice de capteur de pression (60) du capteur de pression (7) sont placés de manière concentrique.

4. Unité de supervision de la pression des pneus (2) selon au moins l'une quelconque des revendications 1 à 3, **caractérisée en ce que** l'orifice d'entrée d'air (5) dans le boîtier électronique (8) présente un diamètre de 0,8 à 1,5 mm.

5. Unité de supervision de la pression des pneus (2) selon au moins l'une quelconque des revendications 1 à 4, **caractérisée en ce que** l'orifice d'entrée d'air (5) dans le boîtier électronique (8) présente une surface de plus de 0,8 mm².

6. Unité de supervision de la pression des pneus (2) selon au moins l'une quelconque des revendications 1 à 5, **caractérisée en ce que** l'orifice d'entrée d'air (5) dans le boîtier électronique (8) présente une hauteur de 2 à 15 mm.

7. Unité de supervision de la pression des pneus (2) selon au moins l'une quelconque des revendications 1 à 6, **caractérisée en ce que** dans la région de l'orifice d'entrée d'air (5) est conçue une paroi protectrice (16).

8. Unité de supervision de la pression des pneus (2) selon au moins l'une quelconque des revendications 1 à 7, **caractérisée en ce que** l'évidement (15) en forme de rainure présente une longueur de plus de 0,8 mm.

9. Unité de supervision de la pression des pneus (2) selon au moins l'une quelconque des revendications 1 à 8, **caractérisée en ce que** le boîtier électronique (8) comporte au moins un premier orifice d'entrée d'air (5) et un deuxième orifice d'entrée d'air (50) dans le boîtier électronique (8), les deux orifices d'entrée d'air (5, 50) étant susceptibles d'être reliés au moyen de l'évidement (15) en forme de rainure.

10. Unité de supervision de la pression des pneus (2) selon au moins l'une quelconque des revendications 1 à 9, **caractérisée en ce que** les composants électroniques (70) placés dans le boîtier électronique (8) sont enrobés d'une masse de scellement.

11. Unité de supervision de la pression des pneus (2) selon au moins l'une quelconque des revendications 1 à 10, **caractérisée en ce que** ce que les composants électroniques (70) placés dans le boîtier électronique (8) sont fermés de manière étanche par un couvercle, notamment au moyen d'un procédé de soudage au laser.

12. Système de supervision de la pression des pneus (3) comprenant :
une valve de pneu (4), destinée à être placée sur une jante de véhicule automobile (3) et
une unité de supervision de la pression des pneus (2), destinée à être placée à l'intérieur d'un pneu de véhicule automobile, pour détecter la pression des pneus, pourvue d'un boîtier électronique (8), dans lequel sont placés une carte de circuit imprimé (9) pourvue d'un capteur de pression (7) destiné à mesurer la pression des pneus, ainsi que d'un émetteur dédié à la transmission de l'au moins un paramètre spécifique au pneu,
dans le boîtier électronique (8) étant conçu au moins un orifice d'entrée d'air (5),
dans le boîtier électronique (8) étant placé un joint (6),
dans le boîtier électronique (8) étant conçu un logement de joint (40) et le logement de joint (40) étant conçu sous la forme d'un évidement de forme sensiblement cylindrique, lequel comporte une surface d'enveloppe (41) ainsi qu'une surface d'étanchéité (14),
le joint (6) étant placé entre le capteur de pression (7) et le boîtier électronique (8) et le joint (6) comportant un orifice de passage d'air (12),
dans la surface d'étanchéité (14) du logement de joint (40) étant conçu un évidement (15) en forme de rainure, **caractérisée en ce que**
l'orifice d'entrée d'air (5) et l'évidement (15) en forme de rainure, ainsi que l'orifice de passage d'air (12) forment une voie vers le capteur de pression, l'orifice d'entrée d'air (5) et l'orifice de passage d'air (12) étant placés en décalage, au moyen de l'évidement (15) en forme de rainure.
